# EUROPEAN PATENT APPLICATION

(11) **EP 4 819 336 A2**
(43) Date of publication of application: **07.10.2026**
(21) Application number: 26200291.8
(22) Date of filing: 12.07.2024
(51) Int. Cl.: H01M 50/291

(54) **BATTERY PACK AND ESS INCLUDING THE SAME**

(30) Priority: 07.09.2023 KR 20230119306; 08.11.2023 KR 20230153945
(62) Document number(s) of the earlier application(s) in accordance with Art. 76 EPC: 24862998.2 / 4 641 802
(71) Applicant: LG Energy Solution, Ltd., Seoul 07335 (KR)
(72) Inventor: LEE, Jeong-Won, 34122 Daejeon (KR); SIM, Chang-Hwi, 34122 Daejeon (KR); OK, Seung-Min, 34122 Daejeon (KR); JEONG, Chan-Young, 34122 Daejeon (KR); JO, Sang-Hyun, 34122 Daejeon (KR); CHOI, Yeo-Joo, 34122 Daejeon (KR)
(74) Representative: BCKIP Part mbB

(57) **Abstract**

The present disclosure relates to a battery pack including a plurality of battery cells; and a pack case including a plurality of unit plates, and configured to accommodate the plurality of battery cells, the pack case having a venting portion disposed in at least one of the plurality of unit plates to release gas vented from the battery cell to outside, wherein at least some of the plurality of unit plates have a venting space extended toward the venting portion to allow the gas to flow.

## Description

### TECHNICAL FIELD

The present disclosure relates to a battery pack and a battery pack and an energy storage system (ESS) including the same.

The present application claims priority to Korean Patent Application No. 10-2023-0119306 filed on September 7, 2023 in the Republic of Korea, the disclosure of which is incorporated herein by reference.

The present application claims priority to Korean Patent Application No. 10-2023-0153945 filed on November 8, 2023 in the Republic of Korea, the disclosure of which is incorporated herein by reference.

### BACKGROUND

Due to being easily applicable to different types of products and having electrical properties such as high energy density, secondary batteries are commonly applied to not only portable devices but also electric vehicles (EVs), hybrid electric vehicles (HEVs) or energy storage systems (ESSs). Secondary batteries remarkably reduce the use of fossil fuels, and in addition to the primary advantage, they do not generate by-products from the use of energy. From this perspective, secondary batteries are gaining attention as a new source of energy that is more environmentally friendly and energy-efficient.

A plurality of battery cells may be connected in series/in parallel to form a battery pack according to the charge/discharge capacity of the battery pack required for Electric Vehicle (EV), Hybrid Electric Vehicle (HEV) or Energy Storage System (ESS). In this instance, it is general to form a battery pack including at least one battery cell and then form a battery pack or a battery rack using at least one battery pack with an addition of other elements. Alternatively, recently, Cell To Pack type battery packs are manufactured by directly receiving battery cells in a pack housing without modularization.

However, in the case of the battery pack including a large number of lithium secondary batteries, in the event that fires and explosions occur, damage will be bigger. The fire in the battery pack starts from an abnormal temperature rise and gas generation of the battery cell in the battery pack. Accordingly, when the internal pressure of the battery cell increases over a predetermined level, venting occurs, and high temperature gases and high temperature sparks including electrode active materials and aluminum particles come out of the battery cell.

Accordingly, to ensure stability of the battery pack while in use, it is necessary to release venting gases to the outside of the battery pack quickly to prevent the internal pressure of the battery pack from increasing any longer when a thermal event such as thermal runaway occurs in the battery pack.

In case venting gases are not properly released into the atmosphere, the internal pressure of the battery pack may increase, causing damage to the components of the battery pack such as the other battery cells or the pack case. Additionally, due to the increased internal pressure of the battery pack, a bigger problem may occur, for example, explosion in the battery pack, so it is very important to release venting gases into the atmosphere.

The conventional battery pack has a venting portion in the pack case to release high temperature venting gases to the outside of the pack case when the thermal event occurs in the specific battery cell or the battery pack.

However, in the case of this type of battery pack, gases may move in all four direction including a direction in which the venting portion is disposed, accelerating thermal runaway propagation among the battery cells. In particular, due to a very narrow space between a flat top plate covering the top of the battery cells and the battery cells, it is difficult to form flow channels for movement of venting gases to the venting portion, and as a consequence, the internal pressure of the battery pack may further increase.

Accordingly, there is a need for directional venting of high temperature gases toward the venting portion to release the gases to the outside of the battery pack quickly when the thermal event occurs in the battery pack.

Additionally, there is a need for a space for the flow of venting gases in the battery pack to prevent the increase in internal pressure of the battery pack.

### DISCLOSURE

### Technical Problem

The present disclosure is designed to solve the above-described problems, and therefore the present disclosure is directed to providing a battery pack for ensuring safety and reliability in an abnormal situation of a battery cell and an energy storage system (ESS) including the same.

However, the problems to be solved by the present disclosure are not limited to the above-described problems, and these and other problems will be clearly understood by those skilled in the art from the following description.

### Technical Solution

To solve the above-described problems, a battery pack according to an aspect of the present disclosure includes a plurality of battery cells; and a pack case including a plurality of unit plates and configured to accommodate the plurality of battery cells, the pack case having a venting portion disposed in at least one of the plurality of unit plates to release gas vented from the battery cell to outside, wherein at least some of the plurality of unit plates have a venting space extended toward the venting portion to allow the gas to flow.

The unit plates may include a top plate configured to cover a top of the battery cell, and the venting space may be formed in the top plate.

The top plate may include a body portion, and a flow channel portion configured such that at least part of the body portion is protruded upwards to form the venting space.

The unit plates may include an end plate configured to cover two sides of a cell array including the plurality of battery cells stacked, and the end plate may include a coupling groove into which the top plate is inserted.

The end plate may include a protruding portion configured such that at least part of an end portion is further protruded upwards than the top plate, and the flow channel portion may be disposed in a space between the protruding portions.

The venting portion may include a plurality of venting portions, and the flow channel portion may include a plurality of flow channel portions corresponding to locations of the venting portions.

The flow channel portion may be extended along a length direction of the battery cells.

The flow channel portion may include a region in which a volume of the venting space increases as it is closer to the venting portion.

The flow channel portion may include an undulating shape on at least one surface in cross section.

The top plate may include a guide portion configured such that at least part of the body portion is inclined upwards toward the flow channel portion.

The plurality of battery cells may be stacked to form a plurality of cell arrays, and the top plate may include a concave portion between the adjacent cell arrays and configured such that at least part of the flow channel portion is protruded downwards.

At least part of the top plate may be protruded downwards to prevent the gas from moving in a stack direction of the plurality of battery cells.

The top plate may include a first rib configured such that at least part of the body portion is protruded downwards and interposed between the battery cells.

The battery pack may further include a barrier member interposed between the battery cells, and the first rib may include an insertion groove into which the barrier member is inserted.

The top plate may include a second rib configured such that at least part of the flow channel portion is protruded downwards and interposed between the battery cells.

The venting portion may include a vent hole passing through at least part of the unit plate, and a cover portion configured to cover at least part of the vent hole.

The cover portion may be configured such that at least part of the unit plate is protruded outwards.

The venting portion may include a discharge hole formed by an open bottom of the cover portion.

Additionally, an energy storage system (ESS) according to the present disclosure may include the battery pack according to the present disclosure.

### Advantageous Effects

According to an aspect of the present disclosure, it may be possible to release venting gases produced in the abnormal situation of the battery cell to the outside of the pack case quickly, thereby effectively preventing the increase in the internal pressure of the pack case. Accordingly, it may be possible to ensure safety and reliability of the battery pack.

Additionally, according to an aspect of the present disclosure, it may be possible to release venting gases to the outside of the pack case quickly, thereby preventing damage to the components of the battery pack due to the venting gases.

Further, according to an aspect of the present disclosure, it may be possible to achieve directional venting (releasing with directionality) of venting gases produced in the abnormal situation of the battery cell, thereby preventing thermal damage to the other battery cells in the battery pack.

Accordingly, it may be possible to prevent or delay events, for example, fires or explosions, resulting from thermal runaway in the battery pack or devices including the battery pack.

Besides, the present disclosure may have many other effects, and the effects will be described in each embodiment, or with regard to effects that can be easily inferred by those skilled in the art, the corresponding description is omitted.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.
FIG. 1 is a full perspective view of a battery pack according to an embodiment of the present disclosure.
FIG. 2 is an exploded perspective view of a battery pack according to an embodiment of the present disclosure.
FIG. 3 is a cross-sectional view of a battery pack according to an embodiment of the present disclosure. For example, FIG. 3 is a cross-sectional view of FIG. 1, taken along the line I-I'.
FIG. 4 is an enlarged view of section A in FIG. 3.
FIG. 5 is a diagram illustrating a flow direction of venting gas in a battery pack according to an embodiment of the present disclosure.
FIG. 6 is a full perspective view of a battery pack according to another embodiment of the present disclosure.
FIG. 7 is a cross-sectional view of a battery pack according to another embodiment of the present disclosure.
FIG. 8 is a cross-sectional view of a battery pack according to another embodiment of the present disclosure.
FIG. 9 is a full perspective view of a battery pack according to another embodiment of the present disclosure.
FIG. 10 is a cross-sectional view of the battery pack of FIG. 9.
FIG. 11 is a cross-sectional view of a battery pack according to another embodiment of the present disclosure. For example, FIG. 11 is a cross-sectional view of FIG. 1, taken along the line I-I'.
FIG. 12 is a cross-sectional view of a battery pack according to another embodiment of the present disclosure.
FIG. 13 is a cross-sectional view of a battery pack according to another embodiment of the present disclosure.
FIG. 14 is a front perspective view of a battery pack according to an embodiment of the present disclosure. Specifically, FIG. 14 is a diagram illustrating a venting direction of venting gas in the battery pack according to an embodiment of the present disclosure.
FIG. 15 is a front view of a battery pack according to an embodiment of the present disclosure.
FIG. 16 is a cross-sectional view of a battery pack according to an embodiment of the present disclosure. For example, FIG. 16 is a cross-sectional view of FIG. 1, taken along the line II-II', showing some components at the front side.

### BEST MODE

Hereinafter, the exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time the application was filed.

Additionally, the present disclosure includes many different embodiments. The description of substantially identical or similar elements in each embodiment is omitted to avoid redundancy, and differences will be described.

The terms indicating directions such as upper, lower, left, right, front and rear are used for convenience of description, but it is obvious to those skilled in the art that the terms may change depending on the position of the stated element or an observer.

For example, in an embodiment of the present disclosure, an X axis direction shown in the drawings may refer to a left-right direction, a Y axis direction may refer to a front-rear direction perpendicular to the X axis direction on the horizontal surface (X-Y plane), and a Z axis direction may refer to a top-bottom direction (a vertical direction) perpendicular to the X axis direction and the Y axis direction.

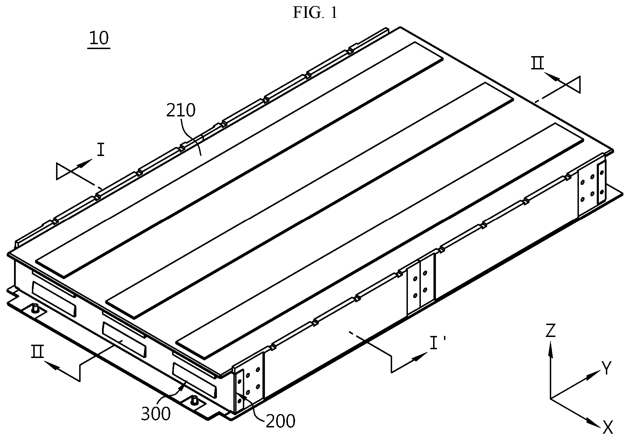

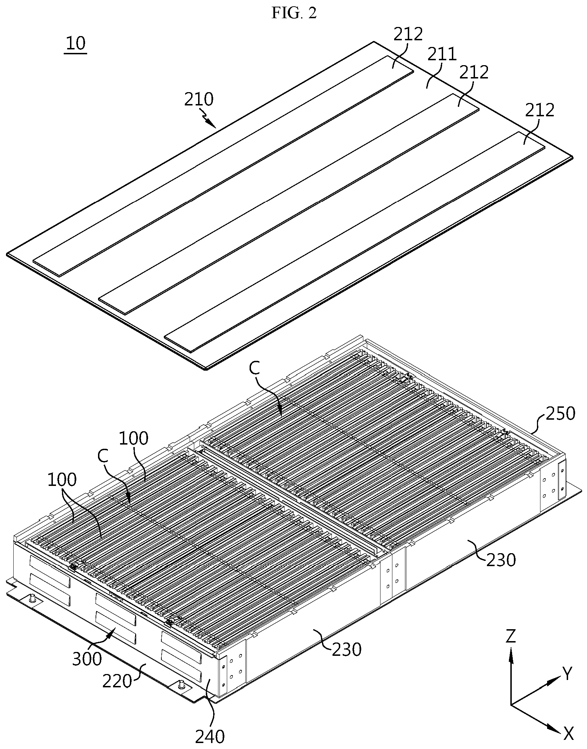

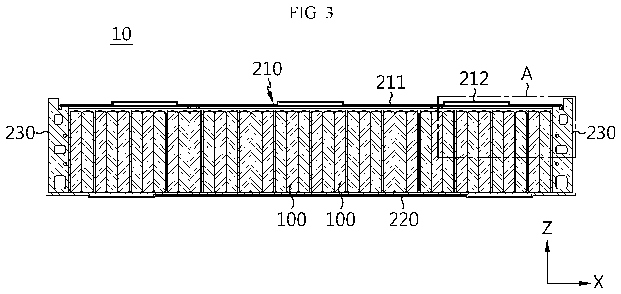

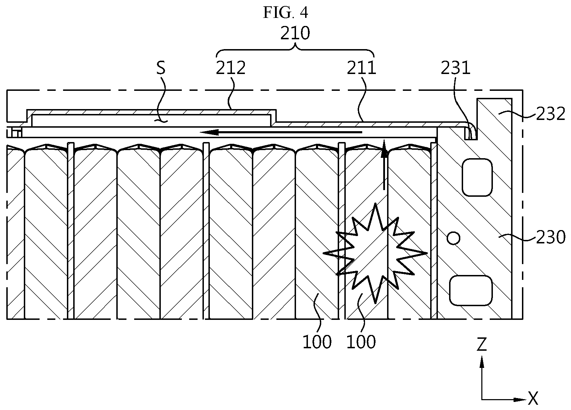

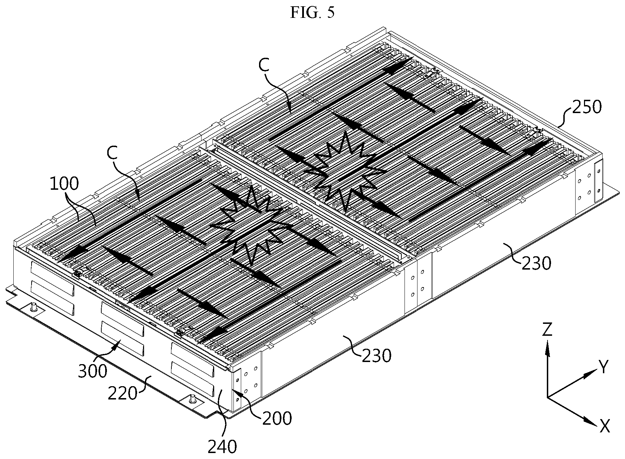

FIG. 1 is a full perspective view of a battery pack according to an embodiment of the present disclosure, and FIG. 2 is an exploded perspective view of the battery pack according to an embodiment of the present disclosure. Additionally, FIG. 3 is a cross-sectional view of the battery pack according to an embodiment of the present disclosure. For example, FIG. 3 is a cross-sectional view of FIG. 1, taken along the line I-I'. Additionally, FIG. 4 is an enlarged view of section A in FIG. 3, and FIG. 5 is a diagram illustrating a flow direction of venting gas in the battery pack according to an embodiment of the present disclosure.

Referring to FIGs. 1 to 5, the battery pack 10 according to an embodiment of the present disclosure includes a battery cell 100 and a pack case 200.

First, referring primarily to FIG. 2, the battery cell 100 may include a plurality of battery cells. Although not shown in the drawings, the plurality of battery cells 100 may include an electrode assembly, a cell case accommodating the electrode assembly and an electrode lead connected to the electrode assembly and extended outward from the cell case to act as an electrode terminal. In this instance, the plurality of battery cells 100 may be electrically connected to each other.

The battery cell 100 may be a pouch-type secondary battery. The cell case of the pouch-type secondary battery may be formed in the shape of a pouch including a metal layer of aluminum interposed between polymer layers.

As shown in FIG. 2, the plurality of battery cells 100 may be arranged side by side in the left-right direction (X axis direction) in a standing position in the vertical direction (Z axis direction). In this instance, each battery cell 100 may have a sealing portion facing the front-rear direction (Y axis direction) and the upward direction (+Z axis direction) and an accommodation portion facing the left-right direction (X axis direction).

The plurality of battery cells 100 may be stacked side by side in the left-right direction (X axis direction) to form a cell array C. As shown in FIG. 2, the cell array C may include a plurality of cell arrays arranged side by side in the front-rear direction (Y axis direction).

Meanwhile, the present disclosure is not limited to a particular type or shape of the battery cell 100, and various types of battery cells 100 known at the time the application was filed may be used to form the battery pack 10 of the present disclosure. For example, the battery cell 100 may include a prismatic battery.

Additionally, the battery pack 10 according to an embodiment of the present disclosure may include a busbar assembly and/or a terminal electrically connected to the plurality of battery cells 100 accommodated inside.

Meanwhile, the pack case 200 may be configured to accommodate the plurality of battery cells 100. That is, the pack case 200 may provide an accommodation space for accommodating the plurality of battery cells 100. The pack case 200 may be made of a material having mechanical rigidity such as metal such as steel or SUS or plastics or include such a material to safely protect the battery cell 100 accommodated inside.

The pack case 200 may include a plurality of unit plates. The plurality of unit plates may be configured to cover the upper and lower surfaces and the sides of the stacked cell arrays C.

The pack case 200 may have a venting portion 300. The venting portion 300 may be configured to release gases produced from the battery cell 100 received in the pack case 200 to the outside of the pack case 200. The venting portion 300 may be disposed in at least one of the plurality of unit plates.

The venting portion 300 may be formed in the shape of a hole that passes through the pack case 200 from inside to outside. Alternatively, the venting portion 300 may be formed in the shape of a venting device that is mounted in the hole of the pack case 200 and works in the event that gases are generated inside the pack case 200.

The pack case 200 may have a venting space S in which gases vented from the battery cell 100 flow. The venting space S may be formed in at least some of the plurality of unit plates. The venting space S may be formed in the unit plate located at the side where gases are vented from the battery cell 100, and the location at which the venting space S is formed may change depending on the gas venting direction. For example, as in the embodiment shown in FIGs. 1 to 4, when gases are vented in the upward direction of the battery cell 100, the venting space S may be formed in the unit plate configured to cover the top of the battery cell 100 among the unit plates.

By the above-described exemplary configuration of the present disclosure, in the event that an abnormal situation occurs in the battery pack 10, venting gases may be guided to the outside of the pack case 200 quickly by the venting space S between the pack case 200 and the battery cells 100.

Additionally, by the above-described exemplary configuration of the present disclosure, as venting gases are released to the outside of the pack case 200 quickly, it may be possible to prevent damage to the components of the battery pack 10 such as other battery cells 100 or the pack case 200 due to venting gases.

In this instance, the venting space S may be extended toward the venting portion 300. That is, the venting space S may be configured to guide the gases toward the venting portion 300. Accordingly, the gases collected in the venting space S may move toward the venting portion 300.

By the above-described exemplary configuration of the present disclosure, in the event that the abnormal situation of the battery pack 10 occurs, the gases produced from the battery cell 100 and guided toward the venting space S may be released to the outside of the pack case 200 through the venting portion 300 quickly. Accordingly, in the event that the abnormal situation of the battery cell 100 occurs, it may be possible to effectively prevent the increase in the internal pressure of the pack case 200, thereby ensuring safety and reliability of the battery pack 10. Additionally, by the above-described exemplary configuration of the present disclosure, in the event that the abnormal situation of the battery pack 10 occurs, it may be possible to suppress or delay the fire spread to the other battery cells 100.

Referring to FIGs. 1 to 4, the unit plates of the pack case 200 may include a top plate 210. The top plate 210 may be configured to cover the top of the plurality of battery cells 100. That is, the top plate 210 may form the upper surface of the pack case 200. The top plate 210 may protect the components received inside such as the battery cells 100, and prevent venting gases from the battery cell 100 from being released to the outside of the pack case 200, especially in the upward direction of the pack case 200.

According to an embodiment of the present disclosure, the venting space S may be formed in the top plate 210. Specifically, the top plate 210 may include a body portion 211 and a flow channel portion 212. The body portion 211 may be configured to cover the top of the battery cells 100. The body portion 211 may be flat in the shape of an approximately rectangular plate.

The flow channel portion 212 may be configured to form the venting space S. The flow channel portion 212 may be configured such that at least part of the body portion 211 is protruded upwards (+Z axis direction). The flow channel portion 212 may be integrally formed with the body portion 211. Further, the flow channel portion 212 may be formed in a shape that a part of the outer surface is concavely recessed in the outward direction for one body portion 211. The flow channel portion 212 may be formed by plastic extrusion molding of the top plate 210.

Accordingly, when viewing from the outside, the flow channel portion 212 may be further protruded outwards than the body portion 211, whereas when viewing from the inside, the flow channel portion 212 may be formed in the shape of a concave groove that is further recessed outwards than the body portion 211. The venting space S may be formed in the inside space of the flow channel portion 212 protruded outwards.

The flow channel portion 212 may include a plurality of flow channel portions, and accordingly the venting space S may also include a plurality of venting spaces. Accordingly, when the abnormal situation occurs in any battery cell 100, venting gases may move to the venting space S closest to the battery cell 100 in which the event occurred.

The body portion 211 may guide venting gases toward the venting space S in the pack case 200. Specifically, as the flow channel portion 212 is protruded upwards, the pressure in the space between the flow channel portion 212 and the battery cell 100 may be lower than the pressure in the space between the body portion 211 and the battery cell 100. Accordingly, as indicated by the solid arrow in FIG. 4, venting gases may move from the top of the vented battery cell 100 to the venting space S having lower pressure along the upper inner surface of the body portion 211.

By the above-described exemplary configuration of the present disclosure, due to the presence of the volume inside the pack case 200, it may be possible to prevent the increase in the internal pressure of the battery pack 10 more effectively. Additionally, venting gases may naturally flow to the venting space S by the pressure difference, inducing directional venting.

Additionally, according to an embodiment, a fire extinguishing portion may be provided in the venting space S. The fire extinguishing portion may be filled with a fire extinguishing material. The fire extinguishing portion may be configured to force the filled fire extinguishing material out when it is melted by high temperature gases or flames. By the above-described exemplary configuration of the present disclosure, it may be possible to absorb heat from high temperature gases or flames or stop the fire at the early stage by the operation of the fire extinguishing portion when gases or flames produced from the battery cell 100 enter the venting space S. Accordingly, it may be possible to suppress or prevent heat propagation between the battery cells 100, thereby ensuring safety.

Hereinafter, the structure of the pack case 200 will be described in detail with reference to FIGs. 1 to 5. In addition to the top plate 210, the unit plates of the pack case 200 may include a base plate 220, an end plate 230, a front plate 240 and a rear plate 250.

The base plate 220 may have an upper surface on which the plurality of battery cells 100 is mounted. The base plate 220 may form the lower surface of the pack case 200, and may be in the shape of an approximately rectangular plate. Additionally, the upper surface of the base plate 220 may be flat to stably mount the plurality of battery cells 100.

The end plate 230, the front plate 240 and the rear plate 250 may be extended upwards from each side (edge portion) of the base plate 220. The end plate 230, the front plate 240 and the rear plate 250 may be configured to cover the sides of the plurality of battery cells 100.

More specifically, the front plate 240 may be located at the front end portion of the base plate 220 (-Y axis direction) and configured to cover the front side of the cell array C. The rear plate 250 may be located at the rear end portion of the base plate 220 (+Y axis direction) and configured to cover the rear side of the cell array C.

Additionally, the end plate 230 may be located at two end portions (+X axis direction and -X axis direction) of the base plate 220 and configured to cover two sides of the cell array C including the plurality of battery cells 100 stacked. That is, the end plate 230 may be configured to cover the two sides of the cell array C in the stack direction. The end plate 230 may include a plurality of end plates arranged in the front-rear direction. Accordingly, the end plates 230 may be arranged along the left-right direction at the two sides of the cell array C, facing each other.

The top plate 210 may be configured to cover the open top of an internal space defined by the base plate 220, the end plate 230, the front plate 240 and the rear plate 250. In particular, referring to FIG. 4, the top plate 210 may be coupled to the end plate 230. Specifically, the top plate 210 may be inserted and coupled to the upper end portion of the end plate 230. The end plate 230 may have a coupling groove 231 into which the top plate 210 is inserted. The coupling groove 231 may be disposed in the upper end portion of the end plate 230.

By the above-described exemplary configuration of the present disclosure, the top plate 210 may fix the end plates 230 disposed at the two sides of the cell array C. Accordingly, it may be possible to prevent the end plates 230 from moving apart in the left-right direction in the event that swelling occurs in the battery cell 100. Additionally, by the above-described exemplary configuration of the present disclosure, in the event that swelling occurs on top of the battery pack 10 while the battery pack 10 is in use, the two sides of the top plate 210 may be fixed by the end plates 230.

Referring to FIG. 4, the upper end portion of the end plate 230 may be stepped. That is, at least part of the upper end portion of the end plate 230 may be formed in a shape that is recessed inwards. Specifically, the end plate 230 may have a protruding portion 232. The protruding portion 232 may be configured such that at least part of the end portion of the end plate 230 is protruded upwards. In particular, the protruding portion 232 may be further protruded upwards than the top plate 210.

The protruding portion 232 may be disposed at a more outside position than the coupling groove 231. Accordingly, the top plate 210 may be coupled between the protruding portions 232 of two end plates 230, and a space may be formed in the horizontal direction along the extension direction of the plane of the top plate 210 between the protruding portions 232.

Additionally, the flow channel portion 212 may be disposed in a space between the protruding portions 232. In this instance, the height to which the flow channel portion 212 is protruded from the body portion 211 may be equal to or smaller than the height to which the protruding portion 232 is further protruded than the body portion 211.

By the above-described exemplary configuration of the present disclosure, as the flow channel portion 212 is disposed in the space formed by the protruding portions 232, the flow channel portion 212 is further protruded outwards than the body portion 211, but the height of the battery pack 10 may not be increased any longer. Accordingly, it may be possible to minimize the volume of the battery pack 10, thereby improving efficiency of the battery pack 10.

Meanwhile, as shown in FIG. 1, the top plate 210 and the base plate 220 may be further protruded outwards than the front plate 240 and the rear plate 250.

By the above-described exemplary configuration of the present disclosure, in the event that the abnormal situation of the battery pack 10 occurs, it may be possible to prevent gases vented through the venting portion 300 from moving to the upper or lower part of the battery pack 10. Accordingly, when a plurality of battery packs 10 of the present disclosure is included in another device in the top-bottom direction, it may be possible to prevent heat propagation to the adjacent battery packs 10.

Additionally, as the top plate 210 is further protruded frontwards and rearwards than the front plate 240 and the rear plate 250, particles may be collected in the protruded space. That is, the top plate 210 may include a collection portion configured such that at least part of the top plate 210 is protruded outwards to collect particles.

Particles or flames having high straightness may move from the vented battery cell 100 to the venting portion 300, hitting the internal structure of the pack case 200, and by the above-described exemplary configuration of the present disclosure, the protruded space may prevent the release of particles to the outside of the pack case 200. Accordingly, it may be possible to suppress flames produced by reaction between particles and oxygen outside of the pack case 200. Accordingly, by the above-described aspect of the present disclosure, it may be possible to ensure safety and reliability of the battery pack 10.

Meanwhile, the venting portion 300 may include a plurality of venting portions. In particular, the venting portion 300 may be located in at least some unit plates of the pack case 200. For example, the venting portion 300 may be disposed in each of the front plate 240 and the rear plate 250.

The venting portion 300 may be separately formed in each of two or more unit plates, and two or more venting portions 300 may be formed in a single unit plate. The plurality of venting portions 300 may be disposed in each of the front plate 240 and the rear plate 250. For example, referring to FIG. 2, each of the front plate 240 and the rear plate 250 may have six venting portions 300, and the battery pack 10 may include 12 venting portions 300 in total.

The plurality of venting portions 300 may be disposed in a single unit plate, spaced apart from each other in the horizontal direction or vertical direction. Additionally, the plurality of venting portions 300 may be symmetrical with respect to the center of the front plate 240 and the rear plate 250.

By the above-described exemplary configuration of the present disclosure, in the abnormal situation of the battery cell 100, high temperature gases may be vented in two directions of the pack case 200 through the venting portions 300 disposed symmetrically at the two sides of the pack case 200. Additionally, by the above-described exemplary configuration of the present disclosure, gases may be first vented from the venting portion 300 closest to the specific battery cell 100 in which the thermal event occurred, thereby venting the gases quickly according to the location at which the thermal event occurred.

In particular, the electrode lead of the battery cell 100 or the empty space may be located in the unit plate where the venting portion 300 is located. Accordingly, it is easy to release gases produced from the battery cell 100 and present inside the pack case 200 to the outside of the pack case 200 more quickly.

Meanwhile, the number or location of the venting portions 300 described on the basis of the embodiment of FIGs. 1 to 5 is provided by way of example, and may be changed to any other number or location.

As described above, the venting portions 300 may be arranged in rows and columns. In this instance, the flow channel portion 212 may also include a plurality of flow channel portions. The plurality of flow channel portions 212 may be disposed at locations corresponding to the locations of the venting portions 300. For example, as shown in FIG. 2, the venting portions 300 may be arranged in 2 rows and 3 columns in each of the front plate 240 and the rear plate 250, and three flow channel portions 212 may be arranged corresponding to the number of columns in which the venting portions 300 are arranged.

By the above-described exemplary configuration of the present disclosure, gases flowing in each venting space S may be released to the outside of the pack case 200 through the venting portion 300 corresponding to each venting space S. Accordingly, it may be possible to induce directional venting more efficiently.

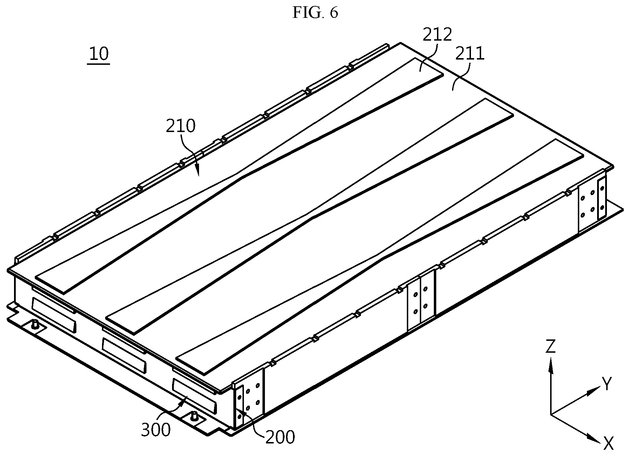

FIG. 6 is a full perspective view of the battery pack according to another embodiment of the present disclosure.

Referring to FIG. 6 together with FIG. 1, the flow channel portion 212 may be formed corresponding to the gas venting direction. The flow channel portion 212 may be extended along the length direction of the battery cell 100. That is, the flow channel portion 212 may be extended along the horizontal direction perpendicular to the stack direction of the battery cells 100. Further, the extension direction of the flow channel portion 212 may face the venting portion 300. For example, the flow channel portion 212 may be extended along the front-rear direction or the placement direction of the front plate 240 and the rear plate 250.

The flow channel portion 212 may be extended toward the venting portion 300 in the same way as the embodiment shown in FIG. 1. Alternatively, the flow channel portion 212 may include a bent part in the middle.

Accordingly, as indicated by the solid arrow in FIG. 4, gases may move toward the top of the battery cell 100 to the venting space S. Additionally, as indicated by the solid arrow in FIG. 5, the gases may be guided toward the front plate 240 and the rear plate 250 having the venting portion 300 by the flow channel portion 212 extended toward the venting portion 300.

By the above-described exemplary configuration of the present disclosure, in the event that the abnormal situation of the battery pack 10 occurs, gases produced from the battery cell 100 may move toward the venting portion 300, not in all directions.

The flow channel portion 212 may include a region in which the volume of the venting space S increases as it is closer to the venting portion 300. For example, as in the embodiment shown in FIG. 6, the flow channel portion 212 may include a region in which the width increases as it is closer to the venting portion 300. Alternatively, the flow channel portion 212 may include a region in which the height increases as it is closer to the venting portion 300. Accordingly, with varying volume of the venting space S in one flow channel portion 212, venting gases may be guided toward the venting portion 300. That is, as it is closer to the venting portion 300, the volume of the venting space S formed by the flow channel portion 212 increases, and the pressure decreases, thereby enhancing the movement of venting gases to the venting portion 300.

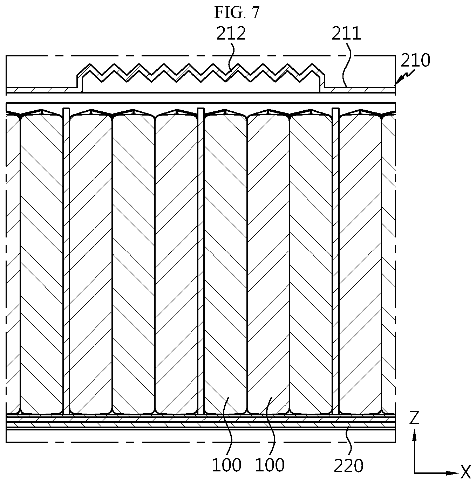

FIG. 7 is a cross-sectional view of the battery pack according to another embodiment of the present disclosure.

Referring to FIG. 7, the flow channel portion 212 may include an undulating shape on at least one surface in cross section. That is, the upper surface of the flow channel portion 212 may have a wavy shape, a triangular shape or a wedge shape. At least one surface of the flow channel portion 212 may be shaped such that regularly or irregularly protruding portions and receding portions repeat along the stack direction of the battery cells 100.

In this case, some of gases, sparks or flames entering the venting space S continuously hit the undulating-shaped structure formed in the flow channel portion 212. Accordingly, by the above-described exemplary configuration of the present disclosure, the path of sparks or flames having high straightness my increase, thereby suppressing the flow of sparks or flames moving to the venting portion 300 more effectively.

Additionally, by the above-described exemplary configuration of the present disclosure, as gases are vented quickly along the front-rear direction in which the venting space S is extended, it may be possible to prevent damage to the components of the battery pack 10 by high temperature heat.

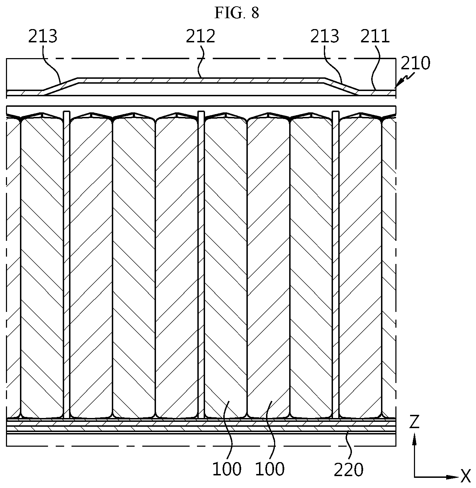

FIG. 8 is a cross-sectional view of the battery pack according to another embodiment of the present disclosure.

The top plate 210 may include a guide portion 213. The guide portion 213 may be configured to guide gases between the body portion 211 and the battery cell 100 to the flow channel portion 212. For example, as in the embodiment shown in FIG. 8, the guide portion 213 may be configured such that at least part of the body portion 211 is inclined upwards toward the flow channel portion 212. By the above-described exemplary configuration of the present disclosure, it may be possible to move gases produced from the battery cell 100 located below the body portion 211 to the flow channel portion 212 more quickly.

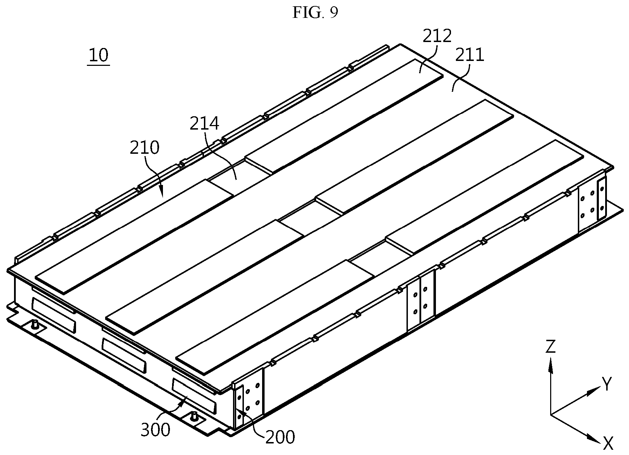

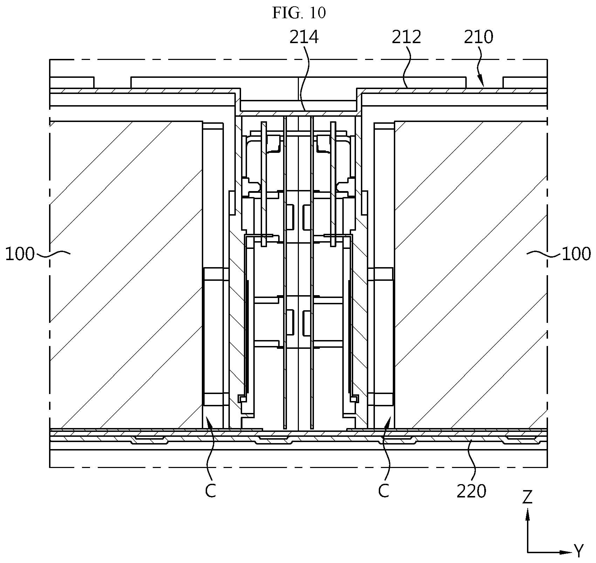

FIG. 9 is a full perspective view of the battery pack according to another embodiment of the present disclosure, and FIG. 10 is a cross-sectional view of the battery pack of FIG. 9.

As described above, the battery cells 100 may be stacked in the left-right direction to form the cell array C. In this instance, the cell array C may include a plurality of cell arrays arranged in the front-rear direction (Y axis direction), i.e., the horizontal direction perpendicular to the stack direction of the battery cells 100. For example, as in the embodiment shown in FIG. 2, two cell arrays C may be arranged in the front-rear direction.

The top plate 210 may be configured to prevent the gases from moving between the cell arrays C. For example, as in the embodiment shown in FIGs. 9 and 10, the top plate 210 may include a concave portion 214. The concave portion 214 may be disposed between the adjacent cell arrays C. The concave portion 214 may be configured to define the venting space S of the flow channel portion 212.

The concave portion 214 may be configured such that at least part of the flow channel portion 212 is protruded downwards. When viewing from the outer side, the concave portion 214 may be more concave inwards than the flow channel portion 212. The adjacent cell arrays C may be spaced a predetermined distance apart from each other, and the concave portion 214 may contact a structure disposed between the cell arrays C.

By the above-described exemplary configuration of the present disclosure, it may be possible to minimize the space for movement of gases between the cell arrays C, thereby minimizing the likelihood that gases or flames will spread to the other cell array C when the thermal event occurs in any cell array C. That is, gases produced from the cell array C in which the thermal event occurred may be released to the outside of the pack case 200 through the venting space S and the venting portion 300 at the side where the thermal event-affected cell array C is located. Accordingly, it may be possible to prevent thermal runaway propagation between the adjacent other cell arrays C.

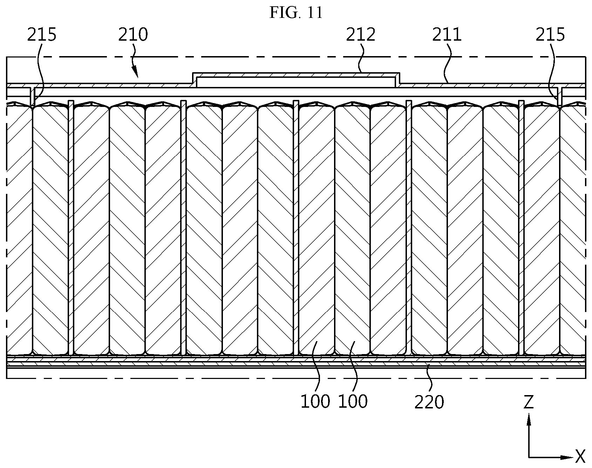

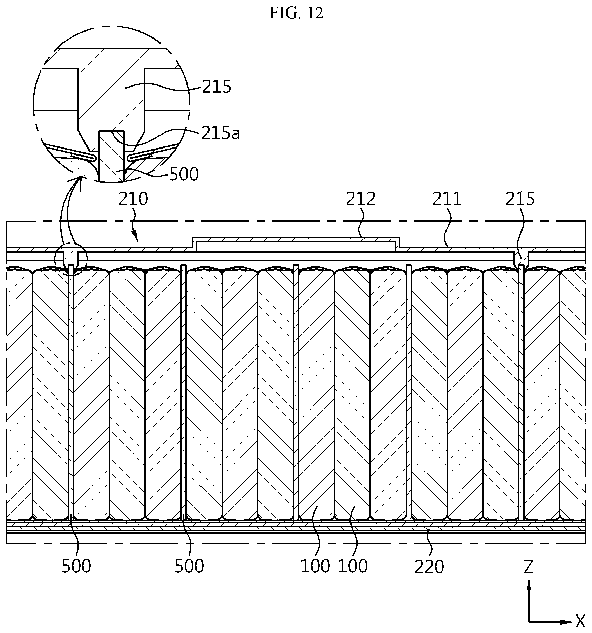

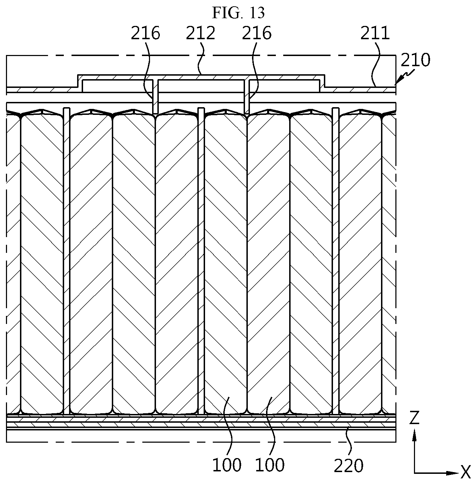

FIG. 11 is a cross-sectional view of the battery pack according to another embodiment of the present disclosure. For example, FIG. 11 may be a cross-sectional view of FIG. 1, taken along the line I-I'. Additionally, each of FIGs. 12 and 13 is a cross-sectional view of the battery pack according to another embodiment of the present disclosure.

At least part of the top plate 210 may be protruded downwards to prevent the gases from moving in the stack direction of the plurality of battery cells 100. That is, the top plate 210 may be configured to divide the battery cells 100 into groups.

By the above-described exemplary configuration of the present disclosure, the gap between the battery cell 100 and the top plate 210 may be minimized, thereby preventing thermal runaway propagation to the adjacent other battery cell 100. Accordingly, it may be possible to minimize the likelihood that gases or flames will propagate to the battery cells 100 of other group when the thermal event occurs in the battery cell 100 of any group.

Specifically, referring to FIG. 11, the top plate 210 may include a first rib 215.

The first rib 215 may be configured such that at least part of the body portion 211 of the top plate 210 is protruded downwards. Accordingly, as the first rib 215 is located inside the battery pack 10, it does not increase the height of the battery pack 10 and does not change the appearance. Additionally, as the first rib 215 is located in the empty space inside the battery pack 10, it may not affect energy density of the battery pack 10.

The first rib 215 may be interposed between the adjacent battery cells 100 among the plurality of battery cells 100. In particular, the first rib 215 may be inserted in between the upper sealing portions of the battery cells 100. The first rib 215 may be disposed between the battery cells 100, and as shown in FIG. 12, when a barrier member 500 is included, the first rib 215 may be disposed on the barrier member 500.

Additionally, the first rib 215 may be extended along the length direction (Y axis direction) of the battery cell 100. The first rib 215 may have the same shape or the length as the battery cell 100. The length of the first rib 215 may be equal to the length of the battery cell 100. Accordingly, two sides of the battery cell 100 may be blocked by the first rib 215, thereby preventing gases from moving.

The top plate 210 may be manufactured by extrusion such that the first rib 215 is incorporated into the top plate 210. By the above-described exemplary configuration of the present disclosure, as the first rib 215 is incorporated into the top plate 210, it may be possible to eliminate the process of coupling the first rib 215 to the top plate 210, and minimize damage to the coupled part of the first rib 215 and the top plate 210.

The first rib 215 may be made of a material having high heat resistance and/or fire resistance performance to maintain a hermetic structure at high temperature and high pressure. For example, the first rib 215 may be made of a fire resistant plastic material.

The first rib 215 may include a plurality of first ribs along a direction. This direction may be defined as the direction in which the battery cells 100 are stacked, i.e., the left-right direction (X axis direction). In this instance, each one first rib 215 may be disposed in the body portion 211 between the flow channel portions 212. For example, in the case of three flow channel portions 212, two first ribs 215 may be provided and the battery cells 100 may be grouped into three groups. The venting gases produced in the space defined by the first rib 215 may smoothly move from the space between the body portion 211 and the top plate 210 to the flow channel portion 212.

By the above-described exemplary configuration of the present disclosure, the battery cells 100 may be thoroughly divided and separated into groups by the first rib 215. Accordingly, when the thermal event occurs in any battery cell 100, it may be possible to prevent the spread of venting gases or flames in the stack direction of the battery cells 100 over the first rib 215, thereby ensuring safety and reliability of the battery pack 10.

Referring to FIG. 12, the battery pack 10 according to an embodiment of the present disclosure may include the barrier member 500. The barrier member 500 may be disposed between the battery cells 100 and configured to divide the plurality of battery cells 100. In particular, the barrier member 500 may include a plurality of barrier members along the direction in which the battery cells 100 are arranged. The barrier member 500 may be disposed every at least one battery cell 100. Accordingly, the plurality of battery cells 100 and the barrier member 500 interposed between them may form a cell stack C.

The barrier member 500 may be a heat insulation pad having a smaller thickness than the battery cell 100. The barrier member 500 may include a material having high heat resistance and/or fire resistance performance. Alternatively, the barrier member 500 may be formed of a pad having compressive strength, and may include, for example, silicone or aerogel.

By the above-described exemplary configuration of the present disclosure, as the battery cells 100 are divided or separated, it may be possible to prevent gases or flames from spreading to the other barrier member 500 adjacent to the barrier member 500. Additionally, by the above-described exemplary configuration of the present disclosure, in the event of swelling in the battery cell 100, the barrier member 500 may compress the battery cells 100, thereby contributing to structural rigidity of the battery cells 100.

Meanwhile, considering convenience or tolerance in assembling, the top plate 210 and the barrier member 500 may be spaced a predetermined distance apart from each other. In such a case, when the thermal event occurs in any battery cell 100, venting gases or flames may spread to the adjacent other battery cell 100 through the predetermined gap between the barrier member 500 and the top plate 210.

Even though there is no gap between the barrier member 500 and one surface of the top plate 210, in the absence of a device for fixing the barrier member 500, warping deformation may occur in the barrier member 500 by the pressure of venting gases or flames and the barrier member 500 may move in the left-right direction. Accordingly, the gap may be formed between the barrier member 500 and the top plate 210 and venting gases may spread to the adjacent other battery cell 100 through the gap.

Accordingly, the first rib 215 may include an insertion groove 215a into which the barrier member 500 is inserted. The insertion groove 215a may be configured such that at least part of the lower end portion of the first rib 215 is recessed inwards. Accordingly, the first rib 215 may be configured to fix the barrier member 500 interposed between the battery cells 100.

By the above-described exemplary configuration of the present disclosure, it may be possible to thoroughly divide and separate the battery cells 100 with the minimum space between the top plate 210 and the barrier member 500. Accordingly, when the thermal event occurs in the battery cell 100, it may be possible to prevent venting gases or flames from spreading in the stack direction of the battery cells 100, thereby ensuring safety and reliability of the battery pack 10.

Additionally, by the above-described exemplary configuration of the present disclosure, as the barrier member 500 is fixed to the top plate 210 by the first rib 215, it may be possible to suppress warping deformation in the barrier member 500. That is, it may be possible to reduce the likelihood that high temperature and high pressure venting gases or flames will push the barrier member 500 and spread to other battery cell 100 when the thermal event occurs. Accordingly, it may be possible to effectively prevent or delay thermal runaway propagation among the battery cells 100 in the event of thermal runaway propagation of the battery pack 10.

Referring to FIG. 13, the top plate 210 may include a second rib 216. The second rib 216 may be configured such that at least part of the flow channel portion 212 of the top plate 210 is protruded downwards.

The second rib 216 may be interposed between the adjacent battery cells 100 among the plurality of battery cells 100. In particular, the second rib 216 may be inserted in between the upper sealing portions of the battery cells 100. The second rib 216 may be disposed between the battery cells 100, and as shown in FIG. 12, when the barrier member 500 is included, the second rib 216 may be disposed on the barrier member 500.

Additionally, the second rib 216 may be extended along the length direction (Y axis direction) of the battery cell 100. The second rib 216 may have the same shape or the length as the battery cell 100. The length of the second rib 216 may be equal to the length of the battery cell 100. Accordingly, two sides of the battery cell 100 may be blocked by the second rib 216, thereby preventing gases from moving.

The top plate 210 may be manufactured by extrusion such that the second rib 216 is incorporated into the top plate 210. By the above-described exemplary configuration of the present disclosure, as the second rib 216 is incorporated into the top plate 210, it may be possible to eliminate the process of coupling the second rib 216 to the top plate 210, and minimize damage to the coupled part of the second rib 216 and the top plate 210.

The second rib 216 may be made of a material having high heat resistance and/or fire resistance performance to maintain a hermetic structure at high temperature and high pressure. For example, the second rib 216 may be made of a fire resistant plastic material.

The second rib 216 may include a plurality of second ribs along a direction. This direction may be defined as the direction in which the battery cells 100 are stacked, i.e., the left-right direction (X axis direction).

By the above-described exemplary configuration of the present disclosure, as the venting space S in the flow channel portion 212 is divided and separated by the second rib 216, it may be possible to prevent thermal runaway propagation among the battery cells 100 in one flow channel portion 212. Accordingly, when the thermal event occurs in any battery cell 100, it may be possible to prevent venting gases or flames from spreading in the stack direction of the battery cells 100 over the second rib 216, thereby ensuring safety and reliability of the battery pack 10.

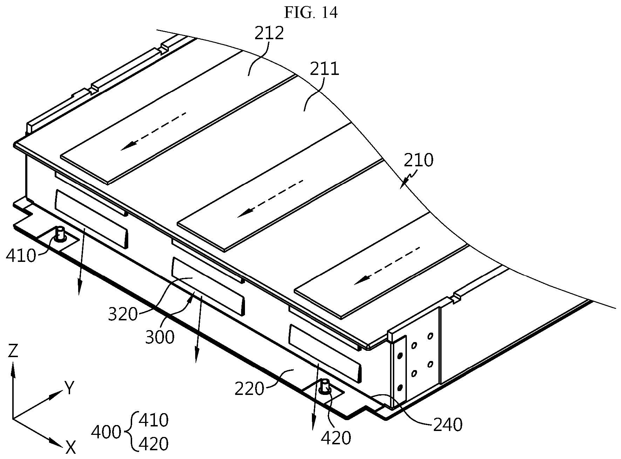

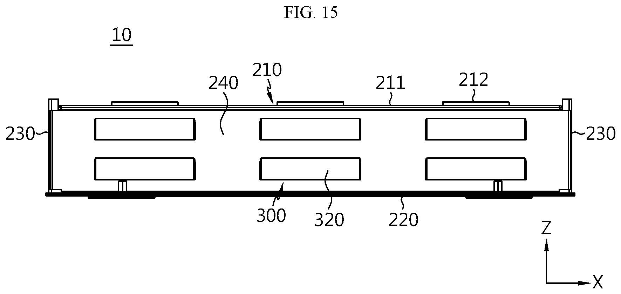

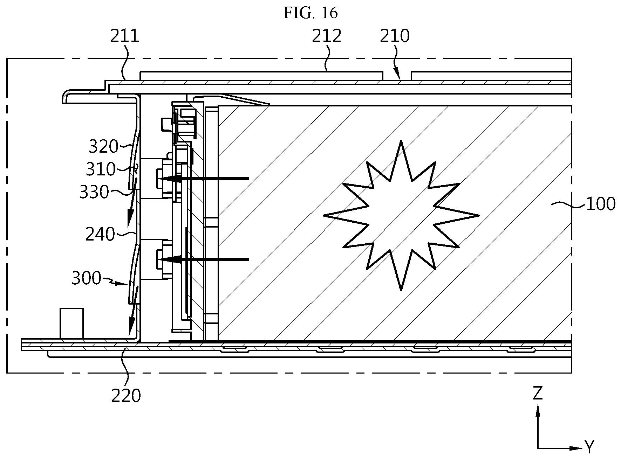

FIG. 14 is a front perspective view of the battery pack according to an embodiment of the present disclosure. Specifically, FIG. 14 is a diagram illustrating the venting direction of venting gas in the battery pack according to an embodiment of the present disclosure. Additionally, FIG. 15 is a front view of the battery pack according to an embodiment of the present disclosure. Additionally, FIG. 16 is a cross-sectional view of the battery pack according to an embodiment of the present disclosure. For example, FIG. 16 is a cross-sectional view of FIG. 1, taken along the line II-II', showing some components at the front side.

Referring to FIGs. 14 to 16, the venting portion 300 may include a vent hole 310 and a cover portion 320. Specifically, as in the embodiment shown in FIG. 16, the vent hole 310 may pass through at least part of the unit plate, and the cover portion 320 may be configured to cover at least part of the vent hole 310.

The cover portion 320 may be disposed on the outer surface of the unit plate of the pack case 200 where the vent hole 310 is formed. The cover portion 320 may be configured such that at least part of the unit plate is protruded outwards.

The cover portion 320 may guide the venting direction of gases vented from the vent hole 310. By the above-described exemplary configuration of the present disclosure, the cover portion 320 may guide the venting of gases in the pack case 200 in the specific direction, i.e., to the outside of the pack case 200. Additionally, it may be possible to prevent gases released to the outside of the pack case 200 from entering the pack case 200 again. Further, by the above-described exemplary configuration of the present disclosure, it may be possible to prevent oxygen from entering the pack case 200 through the vent hole 310. Accordingly, it may be possible to prevent or suppress flames produced from the battery pack 10.

By the above-described exemplary configuration of the present disclosure, as the cover portion 320 is configured to cover the vent hole 310 on the outer side, it may be possible to prevent foreign substances such as dust from entering the pack case 200 through the vent hole 310. Accordingly, it may be possible to ensure the dustproof function of the battery pack 10, thereby guaranteeing safety and reliability of the battery pack 10.

The cover portion 320 may be configured to prevent water infiltration. The cover portion 320 may be configured to prevent infiltration of water into the pack case 200 through the vent hole 310. Alternatively, the cover portion 320 may include any structure or material that can prevent water infiltration. For example, the cover portion 320 may be made of a material having a waterproof property. By the above-described exemplary configuration of the present disclosure, as water infiltration into the battery pack 10 through the vent hole 310 may be prevented, it may be possible to ensure the waterproof function of the battery pack 10.

More specifically, as shown in FIG. 16, the cover portion 320 may have an open bottom. To this end, the cover portion 320 may be configured to cover two sides and front side of the vent hole 310. In particular, the cover portion 320 may be configured to cover the upper side of the vent hole 310. Accordingly, the venting portion 300 may include a discharge hole 330 formed by the open bottom of the cover portion 320.

By the above-described exemplary configuration of the present disclosure, when high temperature gases are released to the outside of the pack case 200 through the discharge hole 330 on bottom in the event of thermal runaway, the vented gases may not be directed upwards. That is, by the exemplary configuration of the present disclosure, directional venting in the downward direction of the battery pack 10 may increase safety of a user located at the upper position.

The battery pack 10 according to an embodiment of the present disclosure may further include a cooling unit 400. The cooling unit 400 may be configured to cause a cooling medium to flow. The cooling unit 400 may include an inlet port 410 and an outlet port 420. The inlet port 410 may be configured to allow the cooling medium to enter the pack case 200, and the outlet port 420 may be configured to allow the cooling medium to exit the pack case 200.

The inlet port 410 and the outlet port 420 may be disposed at one side of the pack case 200. For example, as shown in FIG. 15, the inlet port 410 and the outlet port 420 may be disposed at the side where the front plate 240 is located. In this instance, the venting portion 300 may be disposed at one side of the pack case 200 where the inlet port 410 and the outlet port 420 are disposed, i.e., the front plate 240.

A hose in which the cooling medium flows may be connected to the inlet port 410 and the outlet port 420. By the above-described exemplary configuration of the present disclosure, as the cover portion 320 is disposed at the location at which condensation may easily occur by the cooling medium, it may be possible to prevent water produced by condensation from entering the pack case 200.

An energy storage system (ESS) according to an embodiment of the present disclosure includes the battery pack 10 according to the present disclosure. The ESS may include, for example, a battery container including a plurality of battery packs 10 and a container housing accommodating the plurality of battery packs 10. The ESS may include one or more battery systems.

Besides, the present disclosure may include various battery systems including the battery pack 10 according to the present disclosure. For example, the battery system according to the present disclosure may include a battery charging system, a battery exchange system, a battery repair system according to the present disclosure.

Additionally, the present disclosure may include a vehicle including the battery pack 10 according to the present disclosure. The vehicle according to the present disclosure may include, for example, an electric vehicle, a hybrid electric vehicle or a plug-in hybrid electric vehicle. The vehicle may include a four-wheeled vehicle and a two-wheeled vehicle. The vehicle may operate using power supplied from the battery pack 10 according to an embodiment of the present disclosure.

Although the exemplary embodiments of the present disclosure have been hereinabove illustrated and described, the present disclosure is not limited to the above-described particular embodiments, and a variety of modifications and variations may be made thereto by those having ordinary skill in the technical field pertaining to the present disclosure without departing from the claimed subject matter of the present disclosure, and such variations should not be separately understood from the technical aspect or prospect of the present disclosure.
10: Battery pack
100: Battery cell
200: Pack case
210: Top plate
211: Body portion
212: Flow channel portion
S: Venting space
213: Guide portion
214: Concave portion
215: First rib
215a: Insertion groove
216: Second rib
220: Base plate
230: End plate
231: Coupling groove
232: Protruding portion
240: Front plate
250: Rear plate
300: Venting portion
310: Vent hole
320: Cover portion
330: Discharge hole
400: Cooling unit
410: Inlet port
420: Outlet port
500: Barrier member

The invention may further include one or more of the following items:

### ITEMS:

### [Item 1]

A battery pack comprising:
a plurality of battery cells; and
a pack case including a plurality of unit plates, and configured to accommodate the plurality of battery cells, the pack case having a venting portion disposed in at least one of the plurality of unit plates to release gas vented from the battery cell to outside,
wherein at least some of the plurality of unit plates have a venting space extended toward the venting portion to allow the gas to flow.

### [Item 2]

The battery pack according to item 1,
wherein the unit plates include a top plate configured to cover a top of the battery cell, and the venting space is formed in the top plate.

### [Item 3]

The battery pack according to item 2,
wherein the top plate includes:
a body portion, and
a flow channel portion configured such that at least part of the body portion is protruded upwards to form the venting space.

### [Item 4]

The battery pack according to item 3,
wherein the unit plates include an end plate configured to cover two sides of a cell array including the plurality of battery cells stacked, and
wherein the end plate includes a coupling groove into which the top plate is inserted.

### [Item 5]

The battery pack according to item 4,
wherein the end plate includes a protruding portion configured such that at least part of an end portion is further protruded upwards than the top plate, and
wherein the flow channel portion is disposed in a space between the protruding portions.

### [Item 6]

The battery pack according to item 3,
wherein the venting portion includes a plurality of venting portions, and
wherein the flow channel portion includes a plurality of flow channel portions corresponding to locations of the venting portions.

### [Item 7]

The battery pack according to item 3,
wherein the flow channel portion is extended along a length direction of the battery cells.

### [Item 8]

The battery pack according to item 3,
wherein the flow channel portion includes a region in which a volume of the venting space increases as it is closer to the venting portion.

### [Item 9]

The battery pack according to item 3,
wherein the flow channel portion includes an undulating shape on at least one surface in cross section.

### [Item 10]

The battery pack according to item 3,
wherein the top plate includes:
a guide portion configured such that at least part of the body portion is inclined upwards toward the flow channel portion.

### [Item 11]

The battery pack according to item 3,
wherein the plurality of battery cells is stacked to form a plurality of cell arrays, and
wherein the top plate includes a concave portion between the adjacent cell arrays and configured such that at least part of the flow channel portion is protruded downwards.

### [Item 12]

The battery pack according to item 3,
wherein at least part of the top plate is protruded downwards to prevent the gas from moving in a stack direction of the plurality of battery cells.

### [Item 13]

The battery pack according to item 12,
wherein the top plate includes a first rib configured such that at least part of the body portion is protruded downwards and interposed between the battery cells.

### [Item 14]

The battery pack according to item 13,
wherein the battery pack further comprises a barrier member interposed between the battery cells, and
wherein the first rib includes an insertion groove into which the barrier member is inserted.

### [Item 15]

The battery pack according to item 12,
wherein the top plate includes a second rib configured such that at least part of the flow channel portion is protruded downwards and interposed between the battery cells.

### [Item 16]

The battery pack according to item 1,
wherein the venting portion includes:
a vent hole passing through at least part of the unit plate, and
a cover portion configured to cover at least part of the vent hole.

### [Item 17]

The battery pack according to item 16,
wherein the cover portion is configured such that at least part of the unit plate is protruded outwards.

### [Item 18]

The battery pack according to item 17,
wherein the venting portion includes a discharge hole formed by an open bottom of the cover portion.

### [Item 19]

An energy storage system (ESS) including the battery pack according to any one of items 1 to 18.

## Claims

1. A battery pack (10) comprising:
a plurality of battery cells (100); and
a pack case (200) including a plurality of unit plates, and configured to accommodate the plurality of battery cells (100), the pack case (200) having a venting portion (300) disposed in at least one of the plurality of unit plates to release gas vented from the battery cell (100) to outside,
wherein at least some of the plurality of unit plates have a venting space extended toward the venting portion (300) to allow the gas to flow,
wherein the unit plates include a top plate (210) configured to cover a top of the battery cell (100) and forming an upper surface of the pack case, and the venting space is formed in the top plate (210),
wherein the top plate (210) includes:
a body portion (211), and
a flow channel portion (212) configured such that at least part of the body portion (211) is protruded upwards to form the venting space,
wherein at least part of the top plate (210) is protruded downwards to prevent the gas from moving in a stack direction of the plurality of battery cells (100).

2. The battery pack (10) according to claim 1,
wherein the unit plates include an end plate (230) configured to cover two sides of a cell array including the plurality of battery cells (100) stacked, and
wherein the end plate (230) includes a coupling groove (231) into which the top plate (210) is inserted.

3. The battery pack (10) according to claim 1 or 2,
wherein the venting portion (300) includes a plurality of venting portions (300), and
wherein the flow channel portion (212) includes a plurality of flow channel portions (212) corresponding to locations of the venting portions (300).

4. The battery pack (10) according to claim 1,
wherein the top plate (210) includes:
a guide portion (213) configured such that at least part of the body portion (211) is inclined upwards toward the flow channel portion (212).

5. The battery pack (10) according to any one of the preceding claims,
wherein the plurality of battery cells (100) is stacked to form a plurality of cell arrays, and
wherein the top plate (210) includes a concave portion (214) between the adjacent cell arrays and configured such that at least part of the flow channel portion (212) is protruded downwards.

6. The battery pack (10) according to any one of the preceding claims,
wherein the top plate (210) includes a first rib (215) configured such that at least part of the body portion (211) is protruded downwards and interposed between the battery cells (100).

7. The battery pack (10) according to claim 6,
wherein the battery pack (10) further comprises a barrier member (500) interposed between the battery cells (100), and
wherein the first rib (215) includes an insertion groove (215a) into which the barrier member (500) is inserted.

8. The battery pack (10) according to any one of the preceding claims,
wherein the top plate (210) includes a second rib (216) configured such that at least part of the flow channel portion (212) is protruded downwards and interposed between the battery cells (100).

9. The battery pack (10) according to any one of the preceding claims,
wherein the venting portion (300) includes:
a vent hole (310) passing through at least part of the unit plate, and
a cover portion (320) configured to cover at least part of the vent hole (310).

10. The battery pack (10) according to any one of the preceding claims,
wherein the cover portion (320) is configured such that at least part of the unit plate is protruded outwards.

11. The battery pack (10) according to claim 10,
wherein the venting portion (300) includes a discharge hole (330) formed by an open bottom of the cover portion (320).

12. An energy storage system, ESS, including the battery pack (10) according to any one of the preceding claims.
